# FASCICULE DE BREVET EUROPEEN

(11) **EP 2 964 994 B1**
(45) Date de publication et mention de la délivrance du brevet: **26.06.2019**
(21) Numéro de dépôt: 14718654.8
(22) Date de dépôt: 05.03.2014
(51) Int. Cl.: F16L 55/02, B60K 6/12, F16H 61/4096, F16H 61/4183

(54) **CIRCUIT HYDRAULIQUE COMPORTANT DES VARIANTES DONNANT DES REPONSES MODALES DIFFERENTES**
HYDRAULISCHER KREISLAUF MIT VARIANTEN ZUR BEREITSTELLUNG VERSCHIEDENER MODALER REAKTIONEN
HYDRAULIC CIRCUIT COMPRISING VARIANTS PROVIDING DIFFERENT MODAL RESPONSES

(30) Priorité: 08.03.2013 FR 1352075
(43) Date de publication de la demande: 13.01.2016
(73) Titulaire: Technoboost, 75116 Paris (FR)
(72) Inventeur: BALENGHIEN, Olivier, F-93340 Le Raincy (FR); GACEM, Hatem, F-92150 Suresnes (FR)
(74) Mandataire: Fernandez, Francis Lionel
(86) Numéro de dépôt international: PCT/FR2014/050487
(87) Numéro de publication internationale: WO 2014/135791

(56) Documents cités:
- EP-A1- 0 441 137
- DE-A1-102009 034 177
- US-A1- 2009 188 249
- US-A1- 2010 154 910

## Description

La présente invention concerne un circuit hydraulique comportant une machine hydraulique et des récepteurs, une méthode de conception et un procédé de pilotage de ce type de circuit, ainsi qu'un véhicule automobile hybride équipé d'un tel circuit hydraulique.

Les circuits hydrauliques comportant une machine hydraulique et des récepteurs alimentés par le fluide sous pression, comportent généralement un réseau de canalisations qui relient la machine hydraulique, des accumulateurs, des blocs de commande comprenant des vannes, ainsi que des récepteurs. Un état de la technique correspondant est connu du document US 2009/0188249A1.

En particulier, certains véhicules hybrides hydrauliques comportent pour la motorisation un circuit hydraulique comprenant des accumulateurs de pression rechargés par une pompe entraînée par le moteur thermique ou par les roues motrices, afin d'alimenter des moteurs de traction de ce véhicule. On peut ainsi optimiser le fonctionnement du moteur thermique et récupérer une énergie lors du freinage du véhicule, afin de réduire la consommation de carburant.

Toutefois les pompes ou les moteurs hydrauliques travaillant avec des pressions élevées, pouvant atteindre 300bars, comportent généralement une série de pistons actionnés successivement, délivrant chacun une pointe de pression dans le circuit haute pression, avec une fréquence propre fondamentale d'excitation d'ordre un qui est donnée par le nombre de pistons multiplié par la vitesse de rotation de la pompe. Cette fréquence fondamentale peut couvrir une certaine plage quand la vitesse d'entraînement de la pompe est variable.

Ces machines hydrauliques délivrent aussi des excitations avec des fréquences plus élevées, qui sont des harmoniques de la fréquence fondamentale.

Ces excitations peuvent générer des bruits émis directement par la machine hydraulique, que l'on peut essayer de limiter en optimisant le dessin de cette pompe, ou en réalisant un capotage insonorisant.

Les excitations peuvent aussi générer des bruits en excitant des modes propres de parties du circuit hydraulique recevant le fluide sous pression, notamment des composants ou des canalisations de ce circuit, qui sont alors soumis à des vibrations pouvant émettre des bruits. L'insonorisation de ce circuit avec des éléments insonorisant nécessite d'augmenter l'encombrement et la masse de l'installation, et ajoute des coûts supplémentaires.

Ces problèmes se posent en particulier sur des véhicules de tourisme qui doivent proposer un niveau de confort élevé, avec une masse et un coût réduits.

Pour réduire les vibrations dans un circuit hydraulique de commande d'un embrayage par une pédale, un procédé connu, présenté notamment par le document EP-A1-0441137, dispose de manière permanente en parallèle d'une première canalisation, une deuxième canalisation de longueur différente afin d'obtenir des interférences donnant une neutralisation de modes propres qui seraient obtenus avec une seule de ces canalisations.

Toutefois, ce dispositif statique de neutralisation de modes propres peut convenir pour des fréquences d'excitation particulières, ou pour une plage réduite de fréquences, mais ne convient pas pour atténuer les modes propres dans une large gamme de fréquences, qui sont générés quand la pompe hydraulique est entraînée par un moteur thermique ou par des roues motrices, avec des vitesses très variables.

La présente invention a notamment pour but d'éviter ces inconvénients de la technique antérieure.

Elle propose à cet effet un circuit hydraulique selon la revendication 1.

Un avantage de ce circuit hydraulique est que de manière simple et économique, en ajustant par exemple les longueurs particulières de canalisations de chaque variante afin d'obtenir des modes de ces variantes de circuit qui sont décalés en fréquence, on peut en actionnant les moyens commandés suivant la vitesse de rotation de la machine hydraulique et sa fréquence d'excitation, passer successivement d'une canalisation à l'autre afin d'éviter qu'une variante de ce circuit soit utilisée avec la fréquence d'excitation d'un de ses modes de vibration.

On peut réaliser ainsi une limitation des émissions sonores, sans modifier la machine hydraulique et son fonctionnement.

Le circuit hydraulique selon l'invention peut de plus comporter une ou plusieurs des caractéristiques suivantes, qui peuvent être combinées entre elles.

Avantageusement, les moyens commandés comportent des électrovannes.

En particulier, le circuit hydraulique peut comporter une électrovanne à chaque extrémité des canalisations de longueur différente, qui relie ces canalisations au reste du circuit.

Les deux électrovannes peuvent être prévues de manière à fermer simultanément les deux extrémités de l'une ou de l'autre des canalisations.

L'invention a aussi pour objet une méthode de conception selon la revendication 7.

L'invention a aussi pour objet un procédé de pilotage d'un circuit hydraulique comprenant l'une quelconque des caractéristiques précédentes, qui suivant les fréquences d'excitation, utilise la variante de circuit donnant la réponse modale la plus faible.

Avantageusement, les changements de variante de circuit sont réalisés à des croisements des courbes de réponse modale de chacune de ces variantes.

L'invention a de plus pour objet un véhicule automobile hybride comportant une chaîne de traction disposant d'un circuit hydraulique comprenant une machine hydraulique et des récepteurs reliés par des canalisations, ce circuit comprenant l'une quelconque des caractéristiques précédentes.

En particulier, la machine hydraulique peut comporter des pistons.

L'invention sera mieux comprise et d'autres caractéristiques et avantages apparaîtront plus clairement à la lecture de la description ci-après, donnée à titre d'exemple et de manière non limitative en référence aux dessins annexés dans lesquels :
- la figure 1 est un schéma d'un circuit hydraulique selon l'invention ; et
- la figure 2 est un graphique présentant pour ce circuit en fonction d'un balayage en fréquence, les amplifications données par les deux variantes de circuit qui sont successivement mises en oeuvre.

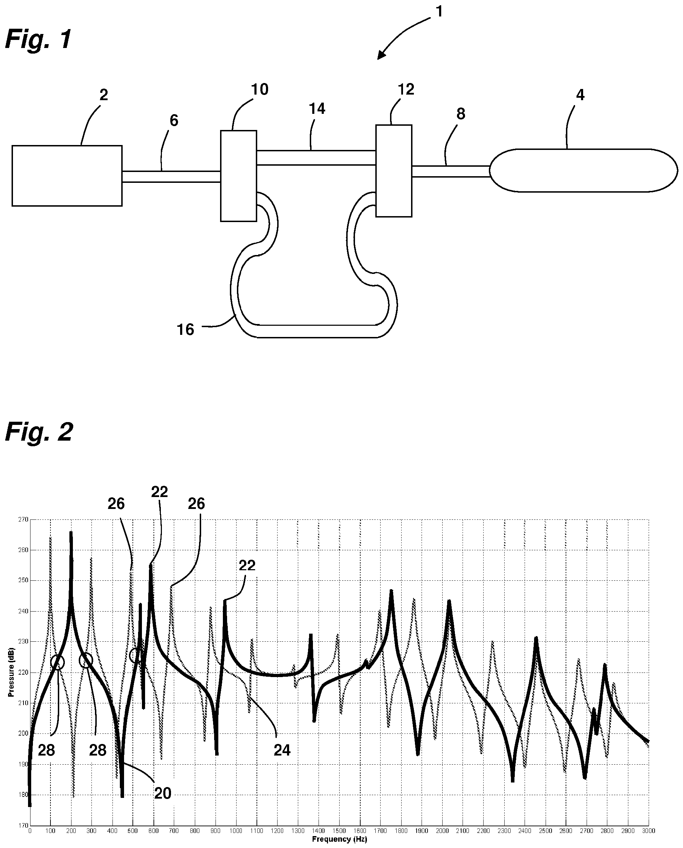

La figure 1 présente un circuit hydraulique 1 comportant une pompe haute pression 2 reliée par un tube de sortie 6 à une première électrovanne 10, qui peut distribuer le fluide vers une canalisation courte 14, ou une canalisation longue de doublage 16 disposée en parallèle de la première canalisation.

Les canalisations courte 14 et longue 16 débouchent dans une deuxième électrovanne 12, qui alimente un tube 8 relié à un accumulateur de pression 4.

Les deux électrovannes 10, 12 sont prévues de manière à fermer simultanément ou non les deux extrémités de l'une ou de l'autre des canalisations 14, 16.

On peut ainsi suivant la position des électrovannes 10, 12, obtenir une liaison entre la pompe 2 et l'accumulateur de pression 4 qui comporte un circuit de petit volume avec la canalisation courte 14 mise en service, ou un circuit de grand volume avec la canalisation longue 16 mise en service. Chacune des variantes de circuit ainsi créées comporte des modes propres vibratoires qui répondent à certaines fréquences d'excitation générées par la pompe 2.

La méthode de conception de ce type de circuit est la suivante.

Sur un premier circuit hydraulique initial on identifie à partir de la gamme de fréquences d'excitation complète générée par sa machine hydraulique, les zones fréquentielles d'amplification modale posant le plus de problèmes d'émission sonore, et la partie initiale du circuit responsable de ces zones fréquentielles. Dans cet exemple, la partie initiale du circuit est représentée par la canalisation courte 14.

On crée ensuite un deuxième circuit comprenant une partie parallèle 16 à la partie initiale 14, comportant des longueurs ou des volumes différents, qui donne quand il est mis en service des zones fréquentielles d'amplification modale qui sont décalées par rapport à celles données par ce premier circuit. Ce décalage provient de la fréquence propre du circuit total qui est modifiée par ce changement de longueur ou de volume du circuit.

La partie de circuit parallèle est représentée par la canalisation longue 16, comprenant un volume nettement plus important. En variante, on peut modifier le diamètre d'une canalisation pour obtenir un volume différent. On peut aussi ajouter sur l'un des circuits un volume additionnel, comme un tube quart d'ondes, un résonateur de Helmholtz ou un tube de Quincke.

On peut ainsi piloter le changement avec les électrovannes 10, 12, pour obtenir la mise en service du premier circuit comprenant la partie initiale courte 14 ou du deuxième circuit comprenant la partie parallèle longue 16, avec un procédé qui évite à chaque fois les pics de résonance en basculant vers la mise en service de l'autre circuit.

La figure 2 montre pour le circuit de la figure 1 en fonction d'une plage de fréquence d'excitation variant de 0 à 3000Hz, la réponse sonore exprimée en dB du premier circuit présentée par la courbe 20 comprenant un trait épais, et du deuxième circuit présentée par la courbe 24 comprenant un trait mince.

Dans la pratique, un essai a été fait avec un premier circuit comportant une longueur totale de 2180mm, et un deuxième circuit comportant une longueur totale de 3380mm, disposant d'une longueur majorée d'environ 50%.

On obtient les résultats suivants. La courbe du premier circuit 20 comporte des modes propres successivement à 200Hz, 540Hz, 590Hz, 950Hz, 1360Hz, 1750Hz, 2030Hz, 2450Hz et 2780Hz. La courbe du deuxième circuit 24 comporte des modes propres successivement à 100Hz, 300Hz, 480Hz, 680Hz, 870Hz, 1070Hz, 1480Hz, 1700Hz, 1860Hz, 2040Hz, 2240Hz, 2460Hz, 2660Hz et 2830Hz.

Le procédé de pilotage du circuit 1 va suivant les plages de fréquences, systématiquement utiliser le circuit donnant la réponse sonore la plus faible. On a ainsi à certains croisements 28 des courbes 20, 24, un changement pour passer d'un circuit à l'autre.

À partir d'une fréquence nulle le procédé met le premier circuit en service jusqu'à une fréquence de 150Hz, ce qui permet d'éviter le mode propre à 100Hz du deuxième circuit. Puis à cette fréquence de 150Hz il passe sur le deuxième circuit jusqu'à la fréquence de 260Hz, ce qui permet d'éviter le mode propre à 200Hz du premier circuit. Puis à cette fréquence de 260Hz il passe sur le premier circuit jusqu'à la fréquence de 520Hz, afin d'éviter la succession de deux fréquences propres du deuxième circuit à 300 et 480Hz.

Le procédé continue ainsi jusqu'à la fréquence maximum de 3000Hz en évitant à chaque fois les pics de fréquence d'un des circuits, ce qui permet d'utiliser intégralement toute la plage de vitesse de rotation de la pompe hydraulique 2, sans écarter certaines plages qui pourraient donner une amplification modale du circuit hydraulique.

On notera que le circuit hydraulique selon l'invention peut comporter une machine hydraulique quelconque, fonctionnant en pompe ou en moteur, générant des oscillations de pression dans ce circuit en fonction de sa vitesse de rotation. En particulier, cette machine peut comporter des pistons disposés radialement ou axialement, qui génèrent une oscillation de pression à chaque fois qu'une chambre d'un piston débouche dans un collecteur d'admission ou d'échappement.

Le circuit hydraulique selon l'invention permet d'éviter des moyens complexes et onéreux de limitation du bruit, comme des tolérances très précises sur la fabrications de la machine hydraulique, ou des chambres de pré-compression sur la platine fermant les chambres des pistons, en amont ou en aval des orifices d'admission et d'échappement.

On peut éviter aussi des équipements complémentaires permettant d'atténuer les pulsations de pression hydraulique, comme des tubes quart d'ondes, des résonateurs de Helmholtz ou des tubes de Quincke.

On peut ainsi dans le cas d'un véhicule hybride hydraulique optimiser le fonctionnement d'un moteur thermique entraînant une pompe hydraulique, en ajustant précisément sa vitesse de rotation sans limitation provenant de problèmes sonores sur le circuit hydraulique. On peut de même ajuster librement la vitesse de rotation d'une machine hydraulique liée aux roues motrices du véhicule.

On peut aussi utiliser le circuit hydraulique suivant l'invention sur d'autres types de véhicules comme des véhicules utilitaires ou agricoles, pour la traction comme pour l'entraînement d'accessoires. On peut l'utiliser de plus pour des applications industrielles fixes.

## Revendications

1. Circuit hydraulique comprenant une machine hydraulique (2) et un accumulateur de pression (4) reliés par des canalisations, cette machine générant des oscillations de pression dans le circuit (1) suivant une plage de fréquences d'excitation, **caractérisé en ce qu'**il comporte deux variantes de ce circuit (14, 16) comportant deux canalisations (14, 16) de longueur différente disposées en parallèle formant chaque variante de circuit quand l'une ou l'autre de ces canalisations est fermée, donnant des réponses modales différentes aux fréquences d'excitation, ainsi que des moyens commandés (10, 12) mettant en oeuvre l'une ou l'autre (14, 16) de ces variantes en étant actionnés suivant la vitesse de rotation de la machine hydraulique (2) et sa fréquence d'excitation, les changements de variante de circuit étant réalisés à des croisements (28) des courbes de réponse modale (20, 24) de chacune de ces variantes, pour utiliser la variante de circuit donnant la réponse modale la plus faible.

2. Circuit hydraulique selon la revendication 1, **caractérisé en ce que** les moyens commandés comportent des électrovannes (10, 12).

3. Circuit hydraulique selon la revendications 2, **caractérisé en ce qu'**il comporte une électrovanne (10, 12) à chaque extrémité des canalisations de longueur différente (14, 16), qui relie ces canalisations au reste du circuit (6, 8).

4. Circuit hydraulique selon la revendication 3, **caractérisé en ce que** les deux électrovannes (10, 12) sont prévues de manière à fermer simultanément les deux extrémités de l'une ou de l'autre des canalisations (14, 16).

5. Véhicule automobile hybride comportant une chaîne de traction disposant d'un circuit hydraulique (1) comprenant une machine hydraulique (2) et un accumulateur de pression (4) reliés par des canalisations, **caractérisé en ce que** ce circuit hydraulique est réalisé selon l'une quelconque des revendications 1 à 4.

6. Véhicule automobile hybride selon la revendication 5, **caractérisé en ce que** la machine hydraulique (2) comporte des pistons.

7. Méthode de conception d'un circuit hydraulique (1) selon la revendication 1, **caractérisée en ce qu'**on identifie sur une première variante de ce circuit à partir de la gamme de fréquences d'excitation complète générée par la pompe hydraulique (2), les zones fréquentielles d'amplification modale posant le plus de problèmes d'émission sonore, et la partie initiale du circuit (14) responsable de ces zones fréquentielles, et que l'on crée ensuite une deuxième variante de ce circuit comprenant une partie parallèle (16) à la partie initiale (14), comportant des longueurs de canalisations (14, 16) de longueur différentes.

## Patentansprüche

1. Hydraulischer Kreislauf, der eine hydraulische Maschine (2) und einen Druckspeicher (4) umfasst, die durch Kanalisationen verbunden sind, wobei diese Maschine Druckschwingungen in dem Kreislauf (1) gemäß einem Erregungsfrequenzbereich erzeugt, **dadurch gekennzeichnet, dass** er zwei Varianten dieses Kreislaufs (14, 16) umfasst, die zwei Kanalisationen (14, 16) mit unterschiedlicher Länge umfassen, die parallel angeordnet sind, indem sie jede Kreislaufvariante bilden, wenn die eine oder andere dieser Kanalisationen geschlossen wird, was unterschiedliche modale Reaktionen bei den Erregungsfrequenzen ergibt, sowie Steuermittel (10, 12), die die eine oder die andere (14, 16) dieser Varianten umsetzen, indem sie gemäß der Drehzahl der hydraulischen Maschine (2) und ihrer Erregungsfrequenz betätigt werden, wobei die Kreislaufvariantenänderungen an Kreuzungen (28) der Kurven der modalen Reaktion (20, 24) jeder dieser Varianten ausgeführt werden, um die Kreislaufvariante zu verwenden, die die schwächste modale Reaktionen ergibt.

2. Hydraulischer Kreislauf nach Anspruch 1, **dadurch gekennzeichnet, dass** die gesteuerten Mittel Magnetventile (10, 12) umfassen.

3. Hydraulischer Kreislauf nach Anspruch 2, **dadurch gekennzeichnet, dass** er ein Magnetventil (10, 12) an jedem Ende der Kanalisationen mit unterschiedlicher Länge (14, 16), die diese Kanalisationen mit dem Rest des Kreislaufs (6, 8) verbinden, umfasst.

4. Hydraulischer Kreislauf nach Anspruch 3, **dadurch gekennzeichnet, dass** die zwei Magnetventile (10, 12) derart vorgesehen sind, dass diese gleichzeitig die zwei Enden der einen und der anderen der Kanalisationen (14, 16) schließen.

5. Hybridkraftfahrzeug, das einen Antriebsstrang umfasst, der über einen hydraulischen Kreislauf (1) verfügt, der eine hydraulische Maschine (2) und einen Druckspeicher (4), die durch Kanalisationen verbunden sind, umfasst, **dadurch gekennzeichnet, dass** dieser hydraulische Kreislauf nach einem der Ansprüche 1 bis 4 hergestellt ist.

6. Hybridkraftfahrzeug nach Anspruch 5, **dadurch gekennzeichnet, dass** die hydraulische Maschine (2) Kolben umfasst.

7. Verfahren zur Konzeption eines hydraulischen Kreislaufs (1) nach Anspruch 1, **dadurch gekennzeichnet, dass** auf einer ersten Variante dieses Kreislaufs ausgehend von dem vollständigen Erregungsfrequenzbereich, der von der hydraulischen Pumpe (2) erzeugt wird, die modalen Frequenzverstärkungszonen, die am meisten Schallemissionsprobleme bewirken, und der anfängliche Teil des Kreislaufs (14), der für diese Frequenzzonen verantwortlich ist, identifiziert werden, und dass anschließend eine zweite Variante dieses Kreislaufs geschaffen wird, die einen parallelen Teil (16) zu dem anfänglichen Teil (14) umfasst, der Längen von Kanalisationen (14, 16) mit unterschiedlicher Länge umfasst.

## Claims

1. A hydraulic circuit including a hydraulic machine (2) and a pressure accumulator (4) connected by pipelines, this machine generating pressure oscillations in the circuit (1) according to a range of excitation frequencies, **characterized in that** it comprises two variants of this circuit (14, 16) comprising two pipelines (14, 16) of different length arranged in parallel forming each circuit variant when one or other of these pipelines is closed, giving different modal responses to the excitation frequencies, and controlled means (10, 12) implementing one or other (14, 16) of these variants, being actuated according to the rotation speed of the hydraulic machine (2) and its excitation frequency, the changes of circuit variant being realized at intersections (28) of the curves of modal response (20, 24) of each of these variants, for using the circuit variant giving the lowest modal response.

2. The hydraulic circuit according to Claim 1, **characterized in that** the controlled means comprise solenoid valves (10, 12).

3. The hydraulic circuit according to Claim 2, **characterized in that** it comprises a solenoid vale (10, 12) at each end of the pipelines of different length (14, 16), which connects these pipelines to the remainder of the circuit (6, 8).

4. The hydraulic circuit according to Claim 3, **characterized in that** the two solenoid valves (10, 12) are provided so as to close simultaneously the two ends of the one or the other of the pipelines (14, 16).

5. A hybrid motor vehicle comprising a power train having a hydraulic circuit (1) including a hydraulic machine (2) and a pressure accumulator (4) connected by pipelines, **characterized in that** this hydraulic circuit is realized according to any one of Claims 1 to 4.

6. A hybrid motor vehicle according to Claim 5, **characterized in that** the hydraulic machine (2) comprises pistons.

7. A design method of a hydraulic circuit (1) according to Claim 1, **characterized in that** there is identified on a first variant of this circuit, from the complete range of excitation frequencies generated by the hydraulic pump (2), the modal amplification frequency zones posing the most problems of noise emission, and the initial part of the circuit (14) responsible for these frequency zones, and **in that** a second variant of this circuit is then created, including a parallel part (16) to the initial part (14), comprises lengths of pipelines (14, 16) of different length.
